# EUROPEAN PATENT SPECIFICATION

(11) **EP 3 595 828 B1**
(45) Date of publication and mention of the grant of the patent: **27.04.2022**
(21) Application number: 17722520.8
(22) Date of filing: 16.03.2017
(51) Int. Cl.: B21F 1/02, B21F 23/00, B23K 9/133

(54) **WIRE STRAIGHTENING DEVICE FOR A WELDING OR BRAZING PLANT**
DRAHTRICHTVORRICHTUNG FÜR EINE SCHWEISS- ODER LÖTANLAGE
DISPOSITIF DE DRESSAGE DE FIL DESTINÉ À UNE INSTALLATION DE SOUDAGE OU DE BRASAGE

(43) Date of publication of application: 22.01.2020
(73) Proprietor: Safra S.p.A., 25039 Travagliato, Brescia (IT)
(72) Inventor: LOMBARDI, Andrea, 25039 Travagliato, Brescia (IT); SPIESS, Michael, 25039 Travagliato, Brescia (IT)
(74) Representative: Chimini, Francesco
(86) International application number: PCT/IT2017/000055
(87) International publication number: WO 2018/167806

(56) References cited:
- EP-A1- 1 726 375
- EP-A1- 3 065 241
- EP-A1- 3 088 117
- JP-A- S5 935 841
- US-A1- 2008 093 408

## Description

The present invention relates to the field of wire welding or brazing plants, and particularly relates to a a storage and feeding assembly for a welding wire for a welding or brazing plant. EP 3 065 241 A1 shows a storage and feeding assembly forming the basis for the preamble of claim 1. EP 3 088 117 A1 shows a storage and feeding assembly in which a pair of feeder rollers and a straightening device are positioned on a robot arm of a welding robot.

As it is known, some welding or brazing plants use a welding wire stored in a drum. The wire is progressively extracted from the drum and fed to the welding apparatus, for example a welding torch moved by a robot.

A problem with these welding plants is that the welding wire contained in the drum is wound in coils and this geometric arrangement of the wire alters the structure of the wire itself and therefore remains "memorized" even when the wire is extracted from the drum and fed to the welding apparatus.

In practice, the wire end subjected to the welding operation does not take a perfectly constant welding position but varies in a sinusoidal manner. Therefore, the welding line also takes a sinusoidal pattern.

In order to try to obviate such a drawback, wire traction devices have been suggested which try to straighten the wire in addition to feeding the wire from the drum to the welding apparatus.

In one embodiment, such known traction devices employ motorized opposing rollers. The rollers, driven by an electric motor so as to rotate in opposite direction, act in traction on the wire extracting it from the drum and, by compressing the wire therebetween, cause a sort of stretching or flattening thereof which reduces the tendency to remain in the coiled configuration.

Such devices, however, not only are unable to completely straighten the welding wire but, since they compress it between the rollers, cause a permanent deformation of the section, with negative consequences on the welding process.

Furthermore, due to dust, dirt or other external agents which may deposit on the conveying rollers, the welding wire surface is susceptible of alterations which may negatively reflect on the welding process.

In other embodiments, the drum is closed at the top by a lid (usually referred to as "pay off") equipped with a wire straightening tube in which a plurality of metal rollers is accommodated, through which the wire exiting the drum is passed.

Such a straightening tube, in addition to being complex and expensive, does not completely eliminate the wire memory.

It is the object of the present invention to suggest a storage and feeding assembly for a welding wire capable of obviating the drawbacks and overcoming the limitations of the prior art devices mentioned above.

Said object is achieved by a storage and feeding assembly according to claim 1.

The dependent claims describe preferred embodiments of the invention.

The features and advantages of the storage and feeding assembly according to the invention will however become apparent from the following description of preferred embodiments, given by way of indicative and non-liniting example, with reference to the accompanying drawings, in which:
- Figure 1 schematically shows a drum in which a welding wire wound in coils is stored and a wire straightening device according to the invention;
- Figure 2 shows the wire straightening device applied to a drum, in a practical embodiment according to the invention;
- Figures 3, 3a and 3b are a perspective view, a front view, and a side view of the wire straightening device of the storage and feeding assembly according to the invention .

In said drawings, 100 indicates as a whole a wire straightening device of a storage and feeding assembly according to the invention.

The wire straightening device 100 is adapted to be employed in a welding or brazing plant using a welding wire 1 wound in coils 1' and stored in a drum 2.

The wire straightening device 100 is positioned downstream of drum 2 and is adapted to feed wire 1 to a welding apparatus (not shown).

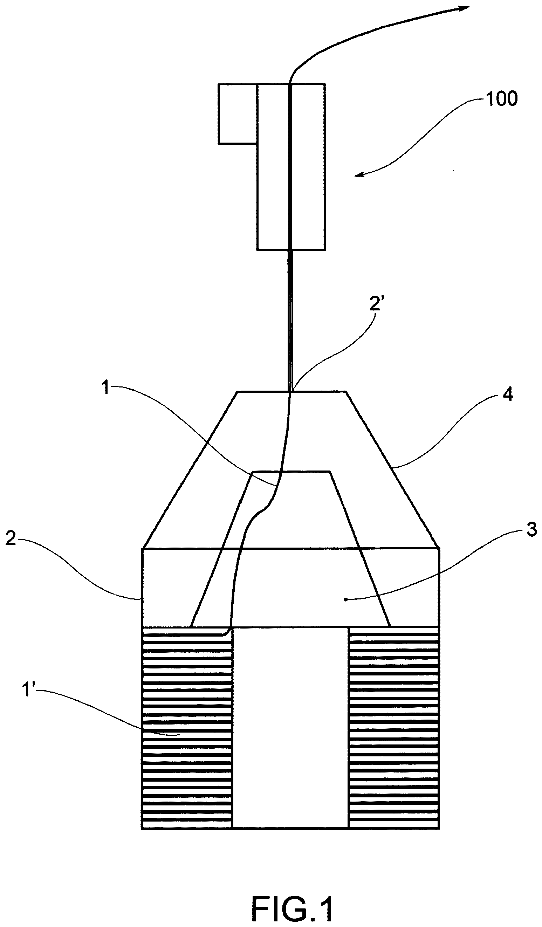

Figure 1 schematically shows a drum 2, generally cylindrical in shape, in which a welding wire 1 wound in coils 1' is placed. The coils 1' of wire 1 are kept in an orderly overlapping relationship allowing a correct exit of the wire from the drum by means of a wire guide device 3, usually also referred to as "pay off", for example of the type described in patent publication DE202011108769. Such a wire guide device 3 generally is conical in shape and comprises a base resting on the coils 1' of the wire and a rotating tubular element guiding the wire of the upper coil towards an outlet opening 2' of drum 2.

In one embodiment, such an outlet opening 2' is obtained in a lid 4 which closes off drum 2.

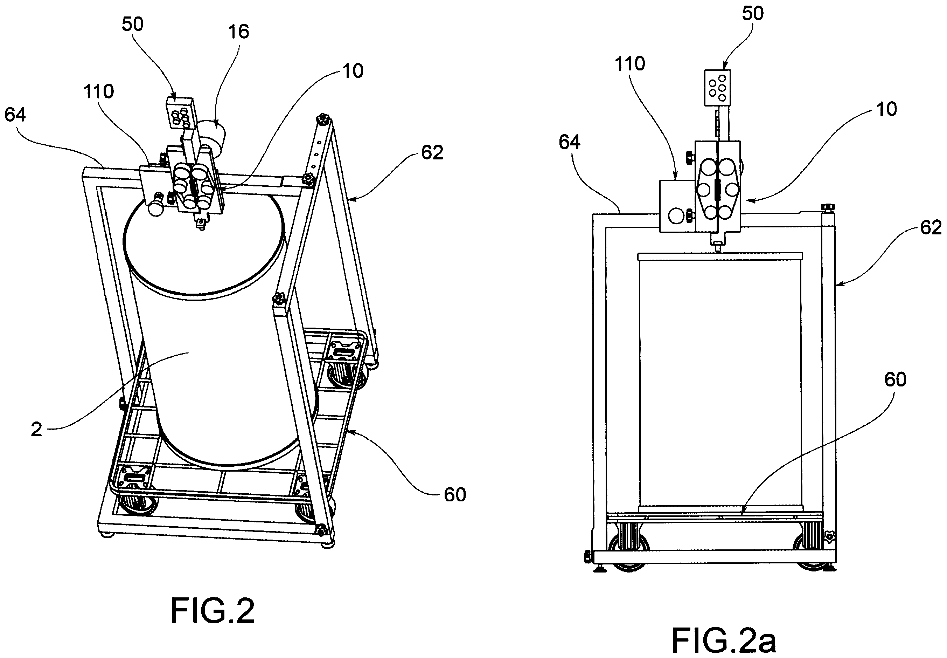

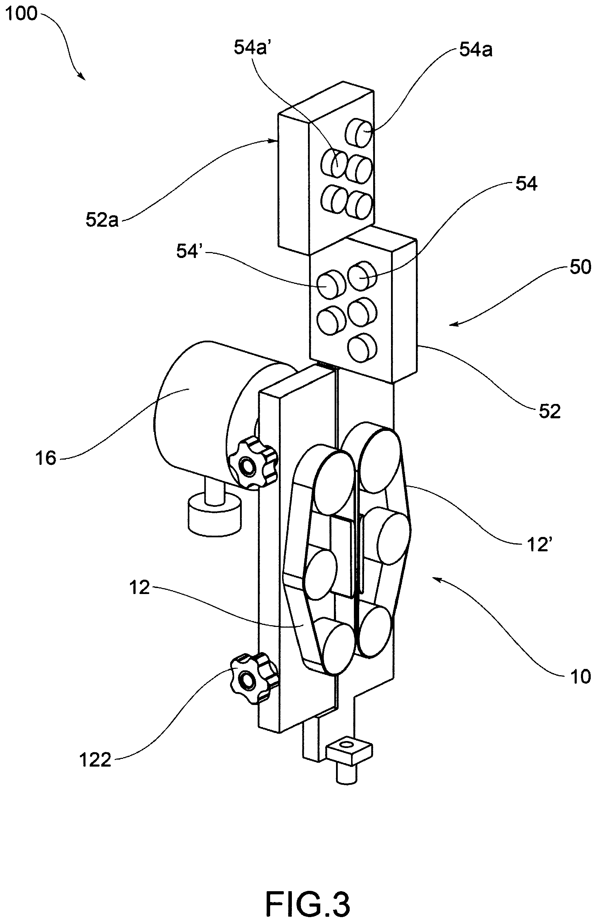

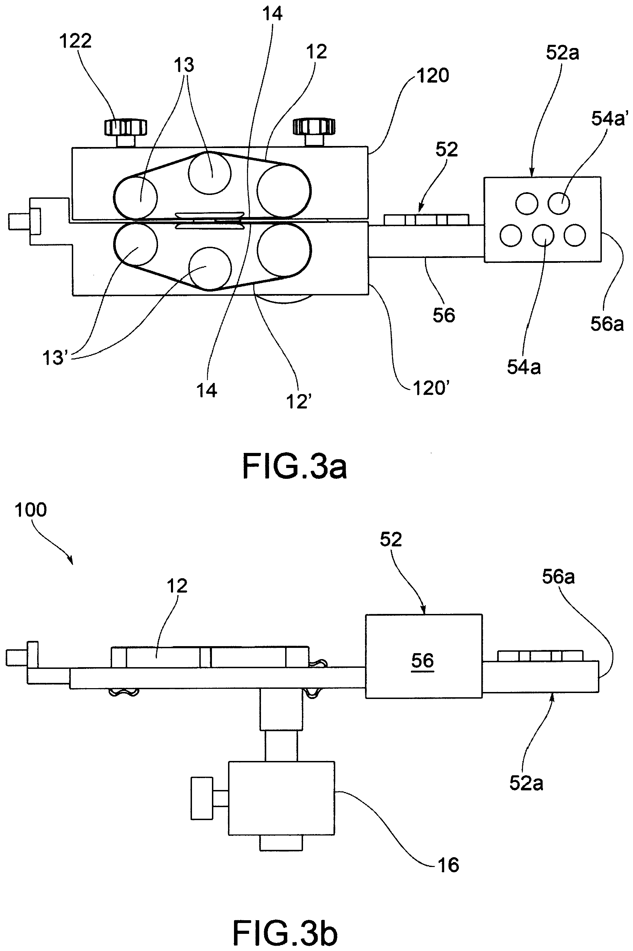

According to the invention, with reference to Figures 2 and 3, the wire straightening device 100 comprises a wire conveying assembly 10 and a straightening assembly 50.

The two assemblies are arranged in cascade, i.e. in series, in the wire feeding direction. The straightening assembly 50 may be positioned downstream or upstream of the wire conveying assembly 10.

According to the invention, the two assemblies are mutually integral, so as to form a single assembly placed between the drum 2 and the welding apparatus. described below in more detail, the two mutually integral assemblies are supported by a structure extending immediately above drum 2, that is by an upper crosspiece of a movable frame on which drum 2 is placed.

The wire conveying assembly 10 comprises two opposing conveying belts 12, 12'. The two conveying belts form two respective rectilinear belt portions 14 facing each other so as to receive and move wire 1 exiting drum 2.

In other words, each conveying belt 12; 12' is returned by respective tensioning belt rollers 13; 13' so as to form a closed loop. One of such tensioning belt rollers 13, 13' is a motor roller adapted to cause the rotation of the respective conveying belt 12; 12'.

In one embodiment, the motor roller is fitted on a shaft of an actuator 16, for example a pneumatic or electric actuator.

In one embodiment, each conveying belt 12; 12' is returned on three tensioning belt rollers 13; 13'.

In one embodiment, the extension of the rectilinear portion 14 is at least equal to the diameter of the tensioning belt rollers 13; 13', i.e. is of the order of tens or, preferably, hundreds of mm.

In fact, as compared to the conveying rollers of the prior art which, having a punctual contact with the welding wire, exert a high specific pressure on the wire itself, the conveying belts 12; 12', having a much wider contact surface with the wire than the rollers, exert a much lesser specific pressure.

The welding wire 1 is therefore not deformed by passing between the conveying belts 12; 12', and even the possible sediment of dust or other external agents on the belts has no effect on the wire surface.

Furthermore, this wire handling without effects of deformation or alteration of the wire is facilitated by the fact that the conveying belts 12; 12' may be made of a material softer than that of which the conveying rollers are usually made.

In one embodiment, the tensioning belt rollers 13; 13' of the two opposing conveying belts 12; 12' are supported by respective conveying plates 120; 120' mutually separable, for example by means of micrometer screws 122, as a function of the diameter of the welding wire 1.

The straightening assembly 50, which, as mentioned above, may be positioned downstream or upstream of the wire conveying assembly 10, comprises at least two straightening roller units 52, 52a arranged in series along the wire feeding direction.

Each straightening unit 52; 52a comprises at least two opposing straightening rollers 54, 54'; 54a, 54a' between which the welding wire 1 is passed being moved by the wire conveying assembly 10.

The straightening rollers 54, 54' of a straightening unit 52 are oriented perpendicularly with respect to the straightening rollers 54a, 54a' of at least another straightening unit 52a. All straightening rollers 54, 54'; 54a, 54a' have, however, the respective rotation axes perpendicular to the feeding direction of the welding wire 1, i.e. perpendicular to the rectilinear portions 14 of the conveying belts 12, 12'.

With such an arrangement of the straightening rollers, it has been experienced that the memory of the welding wire 1 exiting drum 2 is completely eliminated. The welding wire 1 exiting the straightening assembly 54 is therefore completely neutral.

In one embodiment, the straightening rollers 54, 54'; 54a, 54a' are idly mounted to a respective roller support plate 56, 56a. Therefore, the straightening rollers actually carry out only the welding wire 1 straightening function. Since the wire does not exert any torque on the wire, it is straightened but the section thereof is not deformed nor the surface thereof is altered.

In accordance with one embodiment, each straightening unit 52, 52a is provided with at least five straightening rollers 54, 54'; 54a, 54a': at least two first rollers 54; 54a placed side-by-side along the wire feeding direction opposing and staggered with respect to at least three second rollers 54'; 54a' placed side-by-side along the wire feeding direction.

In one embodiment, the straightening rollers of each straightening unit are seven in number: three first rollers 54; 54a placed side-by-side along the wire feeding direction opposing and staggered with respect to four second rollers 54'; 54a' placed side-by-side along the wire feeding direction.

In one embodiment, also the distance between the first and the second straightening rollers may be adjusted as a function of the diameter of the welding wire 1.

In one embodiment shown in Figures 2 and 2a, drum 2 is positioned on a movable trailer 60. The movable trailer 60 is provided with a frame 62 comprising a top crosspiece 64 extending above the opening 2' of drum 2. The wire straightening device 100 of the storage and feeding assembly according to the invention may be secured to a device support bracket 110, for example movable along and/or tilting with respect to the top crosspiece 64.

It should be noted that since the rotating tubular element guiding the wire out of drum 2 is not to carry out any wire straightening function, it may be made with a simple tube having only the guiding and wire protection function. Such a tube may extend up to the inlet of the wire straightening device 100.

According to the invention the storage and feeding assembly for a welding wire 1, comprises a drum 2 adapted to contain the welding wire 1 wound in coils 1', welding wire guiding means associated with drum 2 and adapted to guide the welding wire 1 towards an outlet opening 2' of the wire from the drum, a support frame 62 comprising a top crosspiece 64 extending above the outlet opening 2', and a wire straightening device 100 supported by the top crosspiece 64.

Those skilled in the art may make changes and adaptations to the embodiments of the wire straightening device 100 according to the invention or may replace elements with others functionally equivalent in order to meet contingent needs without departing from the scope of the appended claims.

## Claims

1. A storage and feeding assembly for a welding wire for a welding or brazing plant, comprising:
- a drum (2) adapted to store a welding wire wound in coils, and
- a welding wire straightening device (100) positioned downstream the drum (2) and adapted to feed the welding wire to a welding apparatus,
wherein the welding wire straightening device (100) comprises:
- a wire conveying assembly (10) comprising two opposing conveying belts (12, 12') defining two respective rectilinear belt portions (14) facing each other and operable to rotate in opposite direction to pull the welding wire out from the drum and feed the welding wire to the welding apparatus;
- a straightening assembly (50) positioned downstream or upstream of said wire conveying assembly (10) and comprising at least two straightening roller units (52, 52a) arranged in series along the wire feeding direction, each straightening unit (52; 52a) comprising at least two opposing straightening rollers (54, 54'; 54a, 54a') between which, in use, the welding wire (1) is passed being moved by the wire conveying assembly (10), the rollers (54, 54') of a straightening unit (52) being oriented perpendicularly with respect to the rollers (54a, 54a') of at least another straightening unit (52a), the storage and feeding assembly further comprising welding wire guiding means (3) associated with the drum (2) and adapted to guide the welding wire (1) towards an outlet opening (2') of the wire from the drum,
the storage and feeding assembly being **characterized in that** it further comprises a support frame (62) comprising a top crosspiece (64) extending above the outlet opening (2'), the wire conveying assembly (10) and the straightening assembly (50) being mutually integral so as to form a single assembly supported by the top crosspiece (64).

2. A storage and feeding assembly according to claim 1, wherein the conveying belts (12, 12') are operatively connected to the rotation shaft of an actuator (16) so as to rotate about respective conveying rollers (18, 18') with a mutual opposing rotation direction.

3. A storage and feeding assembly according to claim 1 or 2, wherein the straightening rollers (54, 54'; 54a, 54a') of each straightening unit (52, 52a) are idly mounted to a respective roller support plate (56, 56a).

4. A storage and feeding assembly according to any one of the preceding claims, wherein each straightening unit (52, 52a) is provided with at least five straightening rollers (54, 54'; 54a, 54a'), at least two first rollers (54; 54a) placed side-by-side along the wire feeding direction being opposing and staggered with respect to at least three second rollers (54'; 54a') placed side-by-side along the wire feeding direction.

5. A storage and feeding assembly according to any one of the preceding claims, wherein the conveying belts (12, 12') are supported by respective conveying plates (120; 120') mutually separable as a function of the diameter of the welding wire (1).

6. A storage and feeding assembly according to any one of the preceding claims, wherein the distance between the opposing straightening rollers is adjustable as a function of the diameter of the welding wire (1).

7. An assembly according to anyone of the preceding claims, wherein the wire straightening device (100) is secured to the top crosspiece (64) by means of a device support bracket which is slidable along and/or tilting with respect to the top crosspiece (64).

8. A method for straightening and feeding a welding wire wound in coils, comprising the steps of:
- providing a storage and feeding assembly according to anyone of the previous claims;
- placing the welding wire wound in coils in the drum of the storage and feeding assembly;
- guiding the welding wire of the upper coil towards the outlet opening of the drum and introducing the welding wire between the two rectilinear facing portions of the two opposing conveying belts which rotate in opposite direction to pull the welding wire out from the drum and feed the welding wire to a welding apparatus;
- introducing the wire pulled by the conveying belts between the straightening rollers of the straightening assembly (50).

## Patentansprüche

1. Aufbewahrungs- und Zuführanordnung für einen Schweißdraht für eine Schweiß- oder Lötanlage, umfassend:
- eine Trommel (2), die angepasst ist, einen in Spulen gewickelten Schweißdraht aufzubewahren, und
- eine Schweißdraht-Richtvorrichtung (100), die stromabwärts der Trommel (2) positioniert und angepasst ist, den Schweißdraht einer Schweißvorrichtung zuzuführen,
wobei die Schweißdraht-Richtvorrichtung (100) umfasst:
- eine Drahtzuführanordnung (10) umfassend zwei gegenüberliegende bzw. entgegengesetzte Förderbänder (12, 12'), die zwei jeweilige geradlinige Bandabschnitte (14) definieren, die einander zugewandt sind und dahingehend betätigbar sind, sich in entgegengesetzte Richtung zu drehen, um den Schweißdraht aus der Trommel herauszuziehen und den Schweißdraht der Schweißvorrichtung zuzuführen;
- eine Richtanordnung (50), die stromabwärts oder stromaufwärts der Drahtzuführanordnung (10) positioniert ist und zumindest zwei Richtrolleneinheiten (52, 52a) umfasst, die in Reihe entlang der Drahtzuführrichtung angeordnet sind, wobei jede Richteinheit (52; 52a) zumindest zwei gegenüberliegende bzw. entgegengesetzte Richtrollen (54, 54'; 54a, 54a') umfasst, zwischen denen bei Betrieb der Schweißdraht (1) verläuft, der durch die Drahtzuführanordnung (10) bewegt wird, wobei die Rollen (54, 54') einer Richteinheit (52) senkrecht in Bezug auf die Rollen (54a, 54a') zumindest einer anderen Richteinheit (52a) ausgerichtet sind, wobei die Aufbewahrungs- und Zuführanordnung ferner Schweißdraht-Führungsmittel (3) umfasst, die der Trommel (2) zugeordnet sind bzw. mit dieser verbunden sind und angepasst sind, den Schweißdraht (1) zu einer Austrittsöffnung (2') des Drahtes hin aus der Trommel zu führen,
wobei die Aufbewahrungs- und Zuführanordnung **dadurch gekennzeichnet ist, dass** sie ferner einen Stütz- bzw. Trägerrahmen (62) umfasst, der ein oberes Querstück (64) umfasst, das sich über der Austrittsöffnung (2') erstreckt, wobei die Drahtzuführanordnung (10) und Richtanordnung (50) miteinander integral bzw. einstückig sind, um eine einzige Anordnung zu bilden, die durch das obere Querstück (64) gestützt bzw. getragen ist.

2. Aufbewahrungs- und Zuführanordnung nach Anspruch 1, wobei die Förderbänder (12, 12') operativ mit der Drehwelle eines Aktors (16) verbunden sind, um sich um jeweilige Förderrollen (18, 18') mit einer gegenseitigen bzw. zueinander entgegengesetzten Drehrichtung zu drehen.

3. Aufbewahrungs- und Zuführanordnung nach Anspruch 1 oder 2, wobei die Richtrollen (54, 54'; 54a, 54a') jeder Richteinheit (52, 52a) frei an einer jeweiligen Rollenträgerplatte (56, 56a) montiert sind.

4. Aufbewahrungs- und Zuführanordnung nach einem der vorhergehenden Ansprüche, wobei jede Richteinheit (52, 52a) mit zumindest fünf Richtrollen (54, 54'; 54a, 54a') versehen ist, wobei zumindest zwei erste Rollen (54; 54a), die Seite an Seite entlang der Drahtzuführrichtung platziert sind, in Bezug auf zumindest drei zweite Rollen (54'; 54a') gegenüberliegend und versetzt sind, die Seite an Seite entlang der Drahtzuführrichtung angeordnet sind.

5. Aufbewahrungs- und Zuführanordnung nach einem der vorhergehenden Ansprüche, wobei die Förderbänder (12, 12') durch jeweilige Förderplatten (120; 120') gestützt bzw. getragen sind, die in Abhängigkeit von dem Durchmesser des Schweißdrahtes (1) voneinander separierbar sind.

6. Aufbewahrungs- und Zuführanordnung nach einem der vorhergehenden Ansprüche, wobei der Abstand zwischen den gegenüberliegenden Richtrollen in Abhängigkeit von dem Durchmesser des Schweißdrahtes (1) einstellbar ist.

7. Anordnung nach einem der vorhergehenden Ansprüche, wobei die Drahtrichtvorrichtung (100) an dem oberen Querstück (64) mittels einer Vorrichtungsstütz- bzw. -trägerhalterung befestigt ist, die entlang des oberen Querstücks (64) verschiebbaren ist und/oder sich in Bezug auf dieses neigt.

8. Verfahren zum Richten und Zuführen eines in Spulen gewickelten Schweißdrahtes, umfassend die Schritte:
- Bereitstellen einer Aufbewahrungs- und Zuführanordnung nach einem der vorhergehenden Ansprüche;
- Platzieren des in Spulen gewickelten Schweißdrahtes in der Trommel der Aufbewahrungs- und Zuführanordnung;
- Führen des Schweißdrahtes der oberen Spule zu der Auslassöffnung der Trommel und Einbringen des Schweißdrahtes zwischen die beiden geradlinig zugewandten Abschnitte der beiden gegenüberliegenden Förderbänder, die sich in entgegengesetzte Richtung drehen, um den Schweißdraht aus der Trommel herauszuziehen und den Schweißdraht einer Schweißvorrichtung zuzuführen;
- Einbringen des durch die Förderbänder gezogenen Drahtes zwischen die Richtrollen der Richtanordnung (50).

## Revendications

1. Dispositif de stockage et d'apport d'un fil de soudage destiné à une installation de soudage ou de brasage, comprenant :
- un tambour (2) adapté pour stocker un fil de soudage enroulé en bobines, et
- un dispositif de dressage de fil de soudage (100) positionné en aval du tambour (2) et adapté pour apporter le fil de soudage à un appareil de soudage,
dans lequel le dispositif de dressage de fil de soudage (100) comprend :
- un ensemble de transport de fil (10) comprenant deux courroies transporteuses opposées (12, 12') définissant deux portions de courroie rectilignes (14) respectives en regard l'une de l'autre et opérationnelles pour tourner en direction opposée pour tirer le fil de soudage hors du tambour et apporter le fil de soudage à l'appareil de soudage ;
- un ensemble de dressage (50) positionné en aval ou en amont dudit ensemble de transport de fil (10) et comprenant au moins deux unités de rouleau de dressage (52, 52a) agencées en série suivant la direction d'apport de fil, chaque unité de dressage (52 ; 52a) comprenant au moins deux rouleaux de dressage (54, 54' ; 54a, 54a') opposés entre lesquels, en utilisation, le fil de soudage (1) passe en étant déplacé par l'ensemble de transport de fil (10), les rouleaux (54, 54') d'une unité de dressage (52) étant orientés perpendiculairement par rapport aux rouleaux (54a, 54a') d'au moins une autre unité de dressage (52a), l'ensemble de stockage et d'apport comprenant en outre des moyens de guidage de fil de soudage (3) associés au tambour (2) et adaptés pour guider le fil de soudage (1) vers une ouverture de sortie (2') du fil depuis le tambour,
l'ensemble de stockage et d'apport étant **caractérisé en ce qu'**il comprend en outre un cadre de support (62) comprenant une traverse haute (64) s'étendant au-dessus de l'ouverture de sortie (2'), l'ensemble de transport de fil (10) et l'ensemble de dressage (50) étant mutuellement solidaires de façon à former un ensemble unique supporté par la traverse haute (64).

2. Ensemble de stockage et d'apport selon la revendication 1, dans lequel les courroies transporteuses (12, 12') sont raccordées opérationnellement à l'arbre de rotation d'un actionneur (16) de façon à tourner autour de rouleaux de transport (18, 18') respectifs avec une direction de rotation opposée mutuelle.

3. Ensemble de stockage et d'apport selon la revendication 1 ou 2, dans lequel les rouleaux de dressage (54, 54' ; 54a, 54a') de chaque unité de dressage (52, 52a) sont montés de façon libre sur une plaque de support de rouleau (56, 56a) respective.

4. Ensemble de stockage et d'apport selon l'une quelconque des revendications précédentes, dans lequel chaque unité de dressage (52, 52a) est pourvue d'au moins cinq rouleaux de dressage (54, 54' ; 54a, 54a'), au moins deux premiers rouleaux (54 ; 54a) placés côte à côte suivant la direction d'apport de fil étant opposés et en quinconce par rapport à au moins trois seconds rouleaux (54' ; 54a') placés côte à côte suivant la direction d'apport de fil.

5. Ensemble de stockage et d'apport selon l'une quelconque des revendications précédentes, dans lequel les courroies transporteuses (12, 12') sont supportées par des plaques de transport (120 ; 120') respectives mutuellement séparables en fonction du diamètre du fil de soudage (1).

6. Ensemble de stockage et d'apport selon l'une quelconque des revendications précédentes, dans lequel la distance entre les rouleaux de dressage opposés est réglable en fonction du diamètre du fil de soudage (1).

7. Ensemble selon l'une quelconque des revendications précédentes, dans lequel le dispositif de dressage de fil (100) est arrimé à la traverse haute (64) au moyen d'une console de support de dispositif qui est coulissante le long de la traverse haute (64) et/ou inclinable par rapport à celle-ci.

8. Procédé de dressage et d'apport d'un fil de soudage enroulé en bobines, comprenant les étapes de :
- fourniture d'un ensemble de stockage et d'apport selon l'une quelconque des revendications précédentes ;
- placement du fil de soudage enroulé en bobines dans le tambour de l'ensemble de stockage et d'apport ;
- guidage du fil de soudage de la spire supérieure vers l'ouverture de sortie du tambour et introduction du fil de soudage entre les deux portions en regard rectilignes des deux courroies transporteuses opposées qui tournent en direction opposée pour tirer le fil de soudage hors du tambour et apporter le fil de soudage à un appareil de soudage ;
- introduction du fil tiré par les courroies transporteuses entre les rouleaux de dressage de l'ensemble de dressage (50).
